# FASCICULE DE BREVET EUROPEEN

(11) **EP 2 349 832 B1**
(45) Date de publication et mention de la délivrance du brevet: **04.09.2013**
(21) Numéro de dépôt: 09760227.0
(22) Date de dépôt: 27.10.2009
(51) Int. Cl.: B64C 13/24, F16H 25/12, G05G 5/05, G05G 7/12

(54) **ENSEMBLE DE TRANSMISSION D'EFFORTS ET ENSEMBLE DE COMMANDE COMPRENANT UN TEL ENSEMBLE**
VORRICHTUNG ZUR KRAFTÜBERTRAGUNG UND VORRICHTUNG ZUM ANTREIBEN EINER SOLCHEN VORRICHTUNG
FORCE TRANSMISSION UNIT AND CONTROL UNIT INCLUDING SUCH A UNIT

(30) Priorité: 28.10.2008 FR 0857332
(43) Date de publication de la demande: 03.08.2011
(73) Titulaire: Fly By Wire Systems France, 26240 Saint-Vallier, (FR)
(72) Inventeur: ROUSSEY, Bastien, Jean, Charles, F-26600 Tain L'hermitage (FR)
(74) Mandataire: Grand, Guillaume
(86) Numéro de dépôt international: PCT/FR2009/052073
(87) Numéro de publication internationale: WO 2010/049644

(56) Documents cités:
- DE-A1- 3 534 935
- DE-C- 522 996
- FR-A- 2 137 300
- US-A- 2 678 177
- US-A1- 2002 185 355
- US-B1- 6 641 085

## Description

La présente invention concerne un ensemble de transmission d'efforts utilisé en particulier dans le cadre d'un pilotage d'un aéronef, ainsi qu'un ensemble de commande comprenant un tel ensemble.

Un aéronef, tel qu'un hélicoptère ou un avion, comporte généralement un ensemble de commande équipé d'au moins un levier, communément appelé manche. Le pilote manoeuvre le levier pour transmettre des commandes aux organes directionnels de l'aéronef, tels que des pales de voilure. Le levier est relié aux organes directionnels par l'intermédiaire d'au moins un ensemble de transmission d'efforts.

Il est connu d'utiliser de tels ensembles de transmission comprenant au moins une boîte à ressort de torsion composée d'un ou plusieurs ressorts de torsion permettant de définir la loi de déplacement en fonction d'un couple de force appliqué par le levier. Une telle loi est linéaire par rapport à la variation de la valeur de l'angle entre une position finale et initiale du levier.

Toutefois, le mouvement de rotation du levier est limité par la capacité du ressort à se tordre. Si l'on souhaite avoir une amplitude élevée de variation de l'angle de rotation du levier, il est nécessaire d'augmenter la longueur du ressort de torsion. De manière alternative, il peut être prévu d'augmenter le diamètre du ressort travaillant en torsion. Dans ces deux cas de figure, l'encombrement de la boîte à ressort et, en conséquence, de l'ensemble de transmission est nécessairement augmenté.

DE-A-35 34 935, qui divulgue les caractéristiques du préambule de la revendication 1, propose un ensemble de transmission d'efforts destiné à être intégré dans un embrayage. Dans cet ensemble, une roue, montée rotative autour d'un arbre de moyeu, est munie, à la fois, d'un levier d'entraînement et de deux cames opposées sur lesquelles sont appuyés des galets fixés à un support stationnaire. Sous l'action de ces cames, la roue se translate le long de l'arbre de moyeu, en entraînant alors en translation un poussoir d'appui sur des disques de freinage, tout en comprimant un ressort interposé entre le poussoir et une extrémité annulaire de l'arbre de moyeu. Ce poussoir est lié en rotation à l'arbre de moyeu par une goupille transfixiante, avec un jeu angulaire et une friction non négligeables. Cette solution ne permet donc pas de faire correspondre avec précision une position angulaire du levier et un couple de force transmis, du fait du jeu et de l'hystérésis de friction. Cela rend cette solution inadaptée au domaine de pilotage d'un aéronef, comme évoqué plus haut. Autrement dit, l'ensemble de transmission de DE-A-35 34 935 n'est ni conçu pour, ni destiné à faire correspondre à une position de son levier un effort donné sur ce même levier, en ce sens que les efforts relatifs au levier peuvent être assez différents selon le sens d'actionnement de l'ensemble de transmission, à savoir dans le sens d'un embrayage ou dans le sens d'un débrayage.

Le but de la présente invention est de prévoir un ensemble de transmission d'efforts propre à transmettre efficacement un couple généré par un mouvement de rotation du levier, tout en garantissant un encombrement réduit et une précision de transmission satisfaisante de l'ensemble.

A cet effet, l'invention a pour objet un ensemble de transmission d'efforts permettant notamment la transmission d'efforts entre un levier et un organe directionnel, tel que défini à la revendication 1.

Grâce à l'ensemble selon l'invention, la transmission d'efforts est améliorée, en particulier grâce à la douille à billes, et l'amplitude angulaire du mouvement du levier est optimisée. L'application de l'invention au domaine du pilotage d'un aéronef est alors ainsi remarquable, dans le sens où, avec un encombrement réduit, l'ensemble de transmission garantit une loi de déplacement fiable et précise en fonction d'un couple de force appliqué par ou à un levier.

D'autres caractéristiques avantageuses de l'ensemble de transmission conforme à l'invention, prises isolément ou selon toutes les combinaisons techniquement possibles, sont spécifiées aux revendications dépendantes 2 à 9.

La présente invention a également pour objet un ensemble de commande tel que défini à la revendication 10.

L'invention sera mieux comprise à la lecture de la description qui va suivre, donnée uniquement à titre d'exemple non limitatif et faite en se référant aux dessins sur lesquels :
- la figure 1 est une vue en perspective d'un ensemble de transmission d'efforts conforme à la présente invention ;
- la figure 2 est une vue éclatée en perspective de l'ensemble représenté à la figure 1 ;
- la figure 3 est une vue de côté de l'ensemble représenté à la figure 1 selon la flèche III ;
- la figure 4 est une vue de dessus de l'ensemble représenté à la figure 1 selon la flèche IV ;
- la figure 5 est une coupe de l'ensemble selon la ligne V représentée à la figure 3 ;
- la figure 6 est une vue en perspective de l'ensemble en cours de transmission d'efforts ;
- la figure 7 est une vue en perspective de l'ensemble, une fois l'effort transmis.

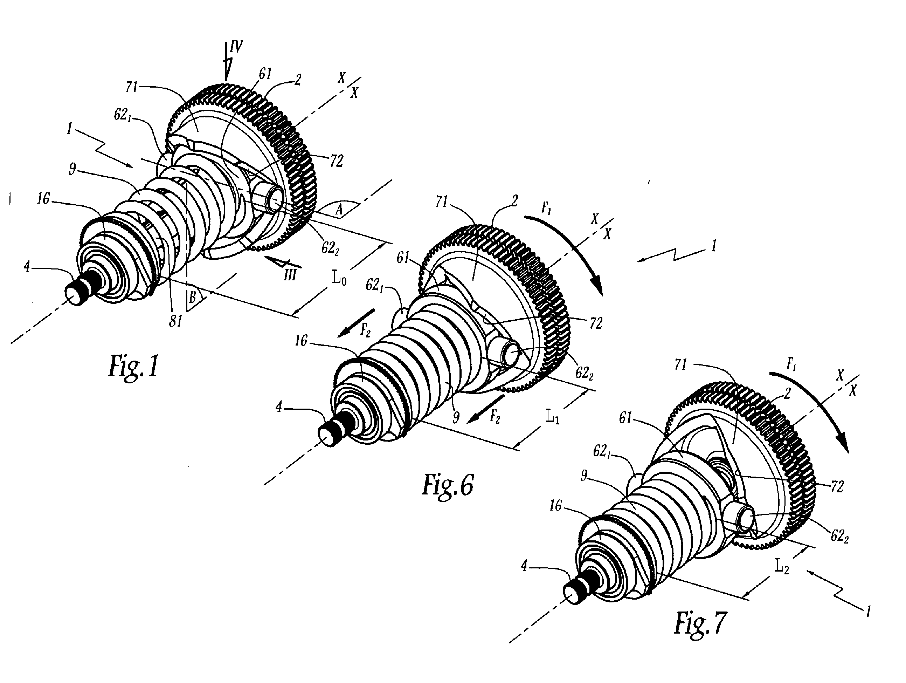

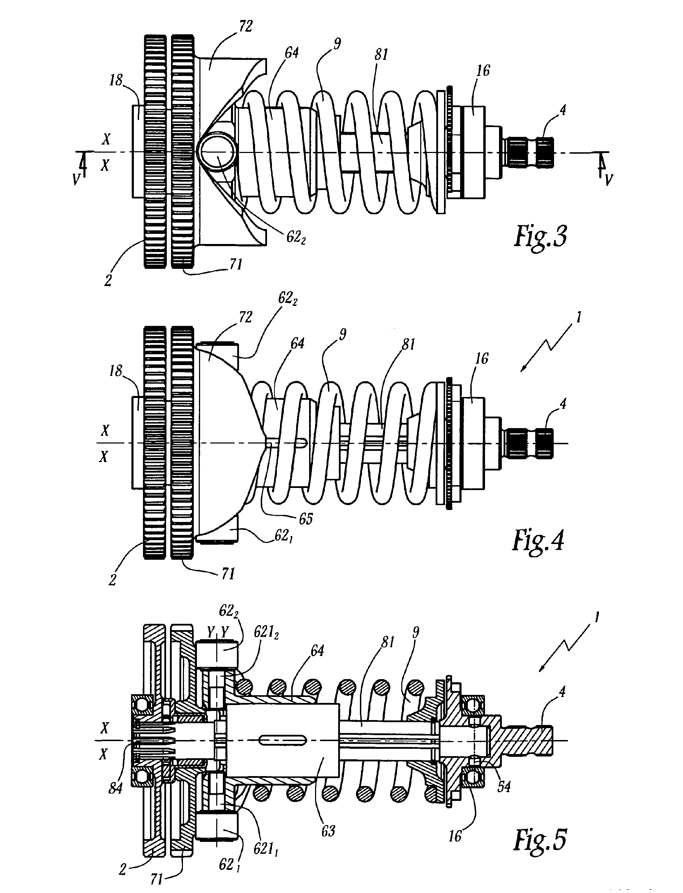

Les figures 1 à 7 représentent un ensemble 1 permettant de transmettre un effort initié, en entrée, par exemple, par un levier non représenté sur les figures. En manoeuvrant ce levier, le pilote transmet des instructions de commande, sous la forme d'un couple, à des organes directionnels d'un aéronef. Ce levier, par l'intermédiaire d'un mécanisme non représenté, est adapté pour actionner un arbre cannelé 4, disposé sur un dispositif de support 5. En sortie de l'ensemble 1, une roue dentée 2, comprenant une ouverture centrale 21, est reliée à un système d'amortissement magnétique non représenté. L'ouverture centrale 21 comprend des rainures et est disposée au centre d'une portion annulaire renfoncée 22, définie à l'intérieur d'un épaulement sensiblement circulaire. Le levier, l'ensemble 1 ainsi que l'organe directionnel constitue un ensemble de commande de l'aéronef.

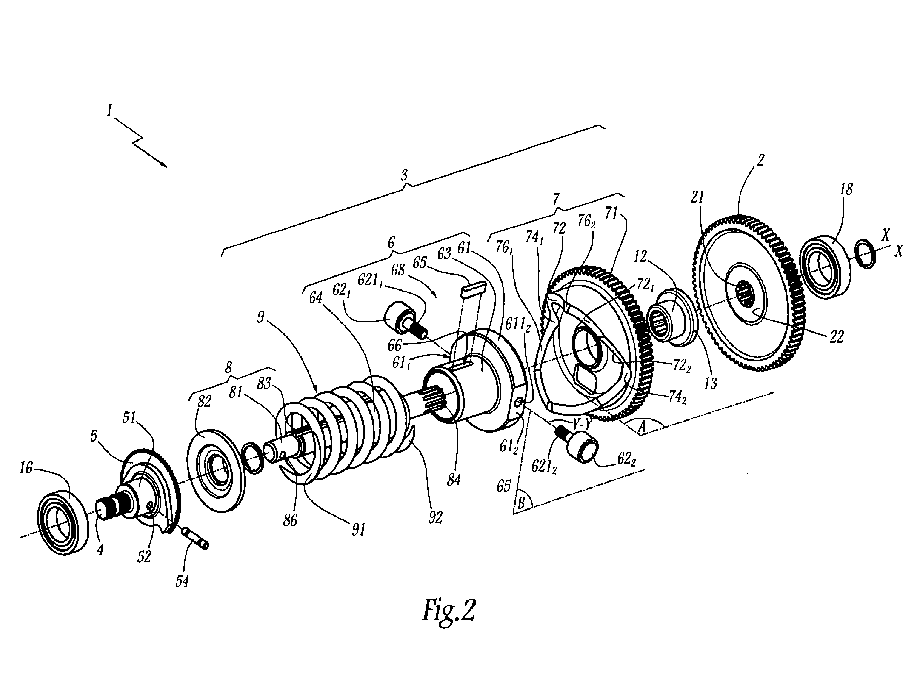

Comme représenté sur la figure 2, l'ensemble 1 comprend un dispositif d'accompagnement d'efforts 3. Ce dispositif 3 comprend un poussoir 6 définissant un axe central X-X. Le poussoir 6 comprend un corps 68 formé de deux supports 61 et 63. Le support 61 de forme globalement circulaire est solidaire du support 63 de forme sensiblement tubulaire et dont le diamètre correspond au diamètre intérieur du support annulaire 61. Les deux supports 61 et 63 peuvent être d'un seul tenant. Le support 61 comprend deux méplats 61₁ et 62₂ disposés de manière diamétralement opposée. Chacun des méplats comprend une ouverture 611₁, 611₂ adaptée pour recevoir chacune un pion 621₁, 621₂ solidaire d'un galet de came 62₁, 62₂. Une fois fixé au support 61, les deux galets 62₁ et 62₂ définissent un axe Y-Y sensiblement perpendiculaire à l'axe X-X. En outre, l'organe 6 comprend une douille à billes 64 rendue solidaire du support 63 par l'intermédiaire d'une clavette 65, adaptée pour être introduite dans une ouverture 66 agencée dans le support 63.

Un premier type de douilles à billes comprend des pistes de billes dites elliptiques. La piste est constituée d'une première portion d'ellipse creusée dans la douille et d'une deuxième portion d'ellipse creusée dans un arbre, le long duquel la douille peut effectuer un mouvement de translation. La deuxième portion est en regard de la première portion par rapport aux billes. Les billes circulent donc le long de la piste entre la douille et l'arbre. Ce type de portion de piste en forme d'ellipse entraîne la présence d'un premier point de contact entre la bille et la douille. De la même manière, il existe un second point de contact entre la même bille et l'arbre. Il est à noter que la douille peut rester fixe, l'arbre effectuant un mouvement de translation par rapport à la douille.

Toutefois, ce type de douille présente l'inconvénient d'être peu rigide et peu résistante à l'application de forts couples. Il est alors proposé de faire usage de pistes en forme d'ogive à quatre points de contact. En effet, on est en présence de deux points de contact entre la bille et la douille et de deux points de contact entre la bille et l'arbre. Comme précédemment décrit, la piste comprend deux portions en regard l'une de l'autre, l'une étant creusée dans la douille et l'autre étant creusée dans l'arbre.

Le dispositif d'accompagnement d'efforts 3 comprend également un deuxième organe 7 à symétrie de révolution autour de l'axe X-X. L'organe 7 comprend une came 71 munie d'une roue dentée et d'un chemin de came 72 solidaire de la roue et disposée le long de sa périphérie. Comme représenté sur les figures 1 et 2, le chemin 72 est symétrique par rapport à un plan A défini par l'axe X-X et l'axe Y-Y. De la même manière, la piste 72 est symétrique par rapport à un plan B passant par l'axe X-X et perpendiculaire au plan A.

On a ainsi défini quatre parties de chemin de came, correspondant chacune sensiblement à un quart du chemin intégral. Chaque quart de chemin dispose de deux portions linéaires 72₁ et 72₂ de pentes d'inclinaison différentes. On notera que l'inclinaison de la portion de piste 72₁ est inférieure à l'inclinaison de la portion 72₂. Par ailleurs, il est à noter que le profil de chacune de ces pentes peut être linéaire, parabolique ou exponentiel. On peut également prévoir de combiner ces différents types de pentes.

Le chemin de came 72 comprend également deux foyers de réception 74₁ et 74₂ destinés à recevoir respectivement les deux galets de came 62₁ et 62₂. De plus, le chemin comprend deux sommets 76₁ et 76₂ conçus pour recevoir les galets de came 62₁ et 62₂. On peut donc noter que deux portions de chemin 72₁ successives sont séparées par l'un des deux sommets 76₁ ou 76₂ et que deux portions de chemin 72₂ successives sont séparées par l'un des deux foyers 74₁ ou 74₂.

De plus, l'ensemble 1 comprend un dispositif de transmission d'efforts 8 comportant un arbre 81 ainsi qu'un support annulaire 82 solidaire d'une première extrémité de l'arbre. L'arbre 81 comprend des rainures 83 permettant le coulissement de la douille à billes 64. Ces rainures sont disposées sur une partie centrale de l'arbre 81. On peut noter que les rainures correspondent à la portion de piste creusée dans l'arbre et en forme de demi-ellipse ou d'ogive.

A la première extrémité, l'arbre 81 dispose d'un trou 86 traversant diamétralement l'extrémité de l'arbre. A sa seconde extrémité en direction de l'organe 7, l'arbre 81 comprend des pattes 84 destinées à être reçues dans l'ouverture centrale 21 de la roue dentée 2 et à coopérer avec les rainures.

Le dispositif d'accompagnement d'efforts 3 comporte également un organe élastique 9, tel qu'un ressort hélicoïdal, agencé entre le support 61 et le support 82. A titre d'exemple, le ressort 9 peut être simplement interposé entre ces deux supports. Les extrémités 91 et 92 du ressort sont alors tronquées sensiblement transversalement de telle sorte qu'elles épousent la forme des deux supports. Il peut également être prévu de coller chacune des deux extrémités 91 et 92 respectivement sur chacun des supports 82 et 61.

L'ensemble 1 comprend, en outre, un roulement à rouleaux cylindriques 12 disposé entre la roue dentée 2 et la came 71. Le roulement 12 est solidaire d'un support 13 adapté pour s'insérer dans la portion renfoncée 22 définie par l'épaulement. L'anneau formant le roulement 12 a une largeur correspondant sensiblement à celle de l'ouverture centrale de la came 71. Le roulement est destiné à recevoir la partie de l'arbre 81 disposée directement à proximité des pattes 84. La présence du roulement 12 permet de s'affranchir de frottement lors de mouvements de rotation relatifs entre les organes 7 et 8.

Le dispositif de support 5 comprend un cylindre 51 comportant une ouverture diamétrale 52. Cette ouverture se situe en face de l'ouverture diamétrale 86 disposée à l'extrémité de l'arbre 81, une fois l'ensemble 1 monté. Un fusible 54, faisant office de clavette, peut être reçu par les deux ouvertures 52 et 86, afin de solidariser l'arbre 81 avec le dispositif 5.

Par ailleurs, l'ensemble 1 comprend un roulement à billes 16 en entrée disposé autour du cylindre 51 du dispositif de support 5 de l'arbre cannelé 4. Il comprend également un roulement à billes 18 en sortie jouxtant la roue dentée 2. La présence de ces deux roulements à billes permet d'obtenir un degré de liberté de l'ensemble 1 par rapport à un carter non représenté visant à supporter l'ensemble.

En fonctionnement, après actionnement du levier non représenté, un mouvement en rotation peut être initié par l'organe 7 dans le cadre d'un premier mode de fonctionnement de l'ensemble 1. Le mouvement de la came 71 peut être enclenché par un moteur indexé, non représenté sur les figures. Par ailleurs, en indexant le moteur dans une position dite « zéro » lorsque le levier est dans une position centrale, on peut choisir de définir ainsi le positionnement de référence dit « zéro » du levier.

Dans un premier temps, la came 71 est dans une position d'équilibre. Les deux galets 62₁ et 62₂ sont disposés respectivement dans les foyers de réception 74₁ et 74₂. Cette position d'équilibre définit donc une référence pour un couple nul. En effet, pour une variation d'angle effectuée par le levier égale à zéro, le couple de sortie appliqué en retour sur le levier en sortie est nul. De plus, le ressort étant peu contraint dans cette position, un jeu concernant le mouvement des galets est très faible voire nul. En pratique, l'ensemble de transmission est préférentiellement conçu avec une certaine valeur de précharge axiale. Cette précharge supprime naturellement tout jeu angulaire autour de la position de stabilité, contrairement, entre autres, aux dispositifs à ressorts de torsion préchargés classiquement employés et montrés, par exemple, dans US-B- 6 641 085.

Comme représenté sur la figure 6, la came 71 effectue alors une rotation dans le sens de la flèche F₁. La came 71 tourne autour de l'arbre 81 qui reste fixe. La came est donc dite menante, alors que la roue 2 est fixe.

Ce mouvement de rotation de la came 71 entraîne un mouvement en translation du poussoir 6, et en particulier, des deux supports 61 et 63, de la douille à billes 64 et des galets de came 62₁ et 62₂ dans le sens des flèches F₂, à savoir selon la direction définie par l'axe X-X. En effet, les galets de came 62₁ et 62₂, se trouvant en position initiale dans les foyers de réception 74₁ et 74₂, sont à présent disposés sur le chemin de came 72 sur lequel ils sont en appui sur toute sa largeur. Les deux galets ont donc effectué une simple translation dans le sens des flèches F₂. La translation du poussoir 6 s'effectue le long de l'arbre 81 par l'intermédiaire de la douille à billes 64 qui est guidée dans les rainures 83 de l'arbre. La présence de la douille à billes permet d'obtenir une meilleure transmission des efforts avec une friction très limitée. A cet égard, l'ensemble 1 peut être assimilé à un dispositif mécanique produisant une loi d'efforts angulaire avec hystérésis de friction faible, toutes les pièces en mouvement étant montées sur des éléments roulants. L'utilisation de douilles à billes dont les pistes sont en forme d'ogive à quatre points de contact permet d'éviter tout risque de coincement et donc toute usure prématurée. En particulier, ces douilles à billes avec pistes en ogive permettent la transmission de couples significatifs entre arbre et douille, tout en permettant des mouvements axiaux.

Le poussoir 6 est donc entraîné dans le même mouvement de translation, à savoir dans le sens des flèches F₂. L'extrémité 92 du ressort solidaire du support 61 se déplace également dans le sens des flèches F₂. La deuxième extrémité 91 du ressort 9 étant solidaire du support 82 qui est fixe, le ressort se trouve donc comprimé.

On peut noter que la longueur L₀ du ressort 9 dans la position initiale, représentée sur la figure 1, est supérieure à la longueur L₁, représentée sur la figure 6.

Si la rotation de la came 71 dans le sens de la flèche F₁ continue, le chemin de came 72 poursuit sa rotation de telle manière que les galets de came 62₁ et 62₂ se trouvent respectivement sur les deux sommets 76₁ et 76₂ du chemin. La distance parcourue par chacun des galets de came dans le sens des flèches F₂ est alors maximale. Le ressort 9 a poursuivi sa compression : il a à présent une longueur L₂ inférieure respectivement aux longueurs L₀ et L₁.

Il est à noter que l'inclinaison des deux portions de chemin de came 72₁ et 72₂ a un effet direct sur la vitesse d'exécution du mouvement de rotation. On peut en effet jouer sur cette inclinaison pour obtenir un couple de rappel progressif. A titre d'exemple, lorsque le pilote lâche le levier, le ressort 9 tend à retrouver sa position initiale d'équilibre, représentée à la figure 1. Le ressort se détend donc et les galets de came 62₁ et 62₂ ont alors tendance à rejoindre leur position d'équilibre, à savoir à se placer dans leur foyer respectif 74₁ et 74₂. Si on souhaite avoir un couple de rappel rapide dans un premier temps et plus progressif dans un deuxième temps, on choisit donc d'abord une pente de chemin de came plus raide puis moins abrupte de sorte que la vitesse des galets de came se déplaçant sur le chemin de came 72 s'adapte en conséquence. L'utilisation de l'ensemble 1 permet ainsi de faire ressentir un effort au pilote en fonction de l'angle de positionnement du levier.

Il est à noter que l'ensemble 1 permet également de définir un positionnement de référence décalé par rapport à la position dite « zéro ». En effet, on peut définir une position initiale différente des foyers de came 74₁ et 74₂, en déphasant initialement, par exemple, la came 71 par rapport au carter non représenté. De plus, cette fonctionnalité peut être aussi assurée de manière automatique. Dans ce cas de figure, la fonction d'autopilotage déplace automatiquement le point d'ancrage défini par la position initiale des foyers de galets 74₁ et 74₂.

La Demanderesse a noté qu'un ensemble de l'état de l'art utilisant un ressort de torsion autorise une amplitude angulaire maximum de 80°, à savoir entre -40° et +40°. La présente invention peut auto riser une amplitude angulaire proche de 160°, à savoir entre -80° et +80°. En eff et, le ressort travaillant en compression ne limite en rien cette amplitude et la gestion du couple de rappel est améliorée.

Il peut être prévu un deuxième mode de fonctionnement de l'ensemble 1. L'arbre 81 peut être à son tour mobile et effectuer ainsi une rotation dans le sens de la flèche F₁, tandis que la came 71 reste fixe. Dans ce mode de fonctionnement, l'arbre 81 est dit menant. Il est à noter que la roue 2 est également mobile. La rotation de l'arbre 81 entraîne la rotation du poussoir 6. Les galets 62₁ et 62₂ solidaires de cet organe commencent à tourner et effectuent ainsi l'ascension le long du chemin 72. Les galets effectuent un mouvement de rotation dans le sens de la flèche F₁ conjugué à un mouvement de translation dans le sens des flèches F₂. La compression du ressort 9 dans ce mode de fonctionnement est comparable à la compression du ressort décrite dans le cadre du premier mode de fonctionnement.

De plus, on peut noter que l'ensemble de transmission 1 et les ensembles associés non représentés, tels que l'ensemble de commande, sont soumis à une probabilité de grippage faible mais non nulle. Lors d'un tel évènement, le pilote est amené à exercer une force importante sur le manche afin de casser le fusible 54. Il peut alors continuer à piloter l'aéronef. En revanche, il ne dispose plus notamment de la même précision et du même confort de pilotage. En d'autres termes, le couple de rappel exercé en retour sur le manche ne s'effectuant plus, le pilote perd en sensation.

## Revendications

1. Ensemble (1) de transmission d'efforts permettant notamment la transmission d'efforts entre un levier et un organe directionnel, comprenant :
- un dispositif de transmission d'efforts (8) comportant un arbre (81) définissant un axe central (X-X), et
- un dispositif d'accompagnement d'efforts (3) comportant :
- une came (71), l'arbre et la came étant adaptés pour être mobiles en rotation de manière relative l'un par rapport à l'autre,
- un poussoir (6), adapté pour coopérer avec la came et pour se translater le long de l'arbre, et
- un organe élastique (9) adapté pour travailler en compression sous l'effet d'un mouvement en translation du poussoir (6), ce mouvement de translation étant provoqué par la mise en marche de l'ensemble de transmission, **caractérisé en ce que** le poussoir (6) comprend, à la fois, un corps (68) conçu pour recevoir des galets de came (62₁, 62₂) adaptés pour coopérer avec la came (71), et une douille à billes (64) disposée dans le corps, la douille étant adaptée pour coopérer avec l'arbre (81).

2. Ensemble de transmission selon la revendication 1, **caractérisé en ce que** la came (71) est mobile autour de l'arbre (81) fixe, le poussoir (6) effectuant une translation le long de l'arbre.

3. Ensemble de transmission selon la revendication 1, **caractérisé en ce que** l'arbre (81) est mobile autour de l'axe central (X-X) et entraîne le poussoir (6) en rotation autour de l'axe (X-X), la rotation du poussoir étant conjuguée à une translation du poussoir le long de l'arbre et la came (71) étant fixe.

4. Ensemble de transmission selon l'une quelconque des revendications précédentes, **caractérisé en ce que** l'arbre (81) comprend des rainures (83) adaptées pour assurer un déplacement en translation de la douille à billes (64) par rapport à l'arbre le long de l'axe (X-X).

5. Ensemble de transmission selon l'une quelconque des revendications précédentes, **caractérisé en ce que** la douille à billes (64) comprend des pistes adaptées pour recevoir des billes, les pistes étant en forme d'ogive.

6. Ensemble de transmission selon les revendications 4 et 5, **caractérisé en ce que** les rainures (83) ont un profil en forme d'ogive et sont disposées sensiblement en regard des pistes.

7. Ensemble de transmission selon l'une quelconque des revendications précédentes, **caractérisé en ce que** le corps (68) du poussoir (6) comprend un premier support (61) d'une première extrémité (92) de l'organe élastique (9), le premier support étant solidaire d'un deuxième support (63) comprenant une ouverture (66) adaptée pour recevoir une clavette (65) afin de rendre solidaire le corps par rapport à la douille à billes (64).

8. Ensemble de transmission selon l'une quelconque des revendications précédentes, **caractérisé en ce que** la came (71) comprend un chemin de came (72) disposant d'un profil au moins en partie linéaire et/ou au moins en partie parabolique et/ou au moins en partie exponentiel.

9. Ensemble de transmission selon l'une quelconque des revendications précédentes, **caractérisé en ce que** l'arbre (81) comprend un support de butée (82) sensiblement annulaire adapté pour coopérer avec une deuxième extrémité (91) de l'organe élastique (9).

10. Ensemble de commande comprenant un levier, un organe directionnel ainsi qu'un ensemble de transmission (1) propre à transmettre un effort imparti par le levier à l'organe directionnel, **caractérisé en ce que** l'ensemble de transmission est selon l'une quelconque des revendications précédentes.

## Patentansprüche

1. Kraftübertragungseinrichtung (1), welche insbesondere die Kraftübertragung zwischen einem Hebel und einem Steuerorgan erlaubt, aufweisend:
- eine Kraftübertragungsvorrichtung (8) mit einem Schaft (81), der eine zentrale Achse (X-X) definiert, und
- eine Kraftmitgangvorrichtung (3), welche aufweist:
- ein Steuerkurvenelement (71), wobei der Schaft und das Steuerkurvenelement dazu eingerichtet sind, um relativ zueinander drehbewegbar zu sein,
- einen Stößel (6), der angepasst ist zum Zusammenwirken mit dem Steuerkurvenelement und zum sich Translatorischbewegen entlang des Schafts, und
- ein elastisches Element (9), das eingerichtet ist zum Komprimiert-werden unter der Wirkung einer Translationsbewegung des Stößels (6), wobei diese Translationsbewegung bewirkt wird durch den Betrieb der Übertragungseinrichtung, **dadurch gekennzeichnet, dass** der Stößel (6) sowohl einen Körper (68), der eingerichtet ist zum Aufnehmen von Mitnahmerollen (62₁, 62₂), die eingerichtet sind zum Zusammenwirken mit dem Steuerkurvenelement (71), als auch eine Kugelführungsbüchse (64) aufweist, die in dem Körper angeordnet ist, wobei die Führungsbüchse eingerichtet ist zum Zusammenwirken mit dem Schaft (81).

2. Übertragungseinrichtung gemäß Anspruch 1, **dadurch gekennzeichnet, dass** das Steuerkurvenelement (71) um einen feststehenden Schaft (81) bewegbar ist, wobei der Stößel (6) eine Translationsbewegung entlang des Schafts durchführt.

3. Übertragungseinrichtung gemäß Anspruch 1, **dadurch gekennzeichnet, dass** der Schaft (81) um die zentrale Achse (X-X) bewegbar ist und den Stößel (6) um die Achse (X-X) drehend antreibt, wobei die Rotation des Stößels gekoppelt ist mit einer Translationsbewegung des Stößels entlang des Schafts und dem Steuerkurvenelement (71), das feststehend ist.

4. Übertragungseinrichtung gemäß irgendeinem der vorhergehenden Ansprüche, **dadurch gekennzeichnet, dass** der Schaft (81) Nuten (83) aufweist, die eingerichtet sind zum Gewährleisten einer Translationsverlagerung der Kugelführungsbüchse (64) bezüglich der Welle entlang der Achse (X-X).

5. Übertragungseinrichtung gemäß irgendeinem der vorhergehenden Ansprüche, **dadurch gekennzeichnet, dass** die Kugelführungsbüchse (64) Laufbahnen aufweist, die eingerichtet sind zum Aufnehmen der Kugeln, wobei die Laufbahnen eine Spitzbogenform haben.

6. Übertragungseinrichtung gemäß irgendeinem der Ansprüche 4 und 5, **dadurch gekennzeichnet, dass** die Nuten (83) ein Spitzbogenprofil haben und im Wesentlichen den Laufbahnen zugewandt geordnet sind.

7. Übertragungseinrichtung gemäß irgendeinem der vorhergehenden Ansprüche, **dadurch gekennzeichnet, dass** der Körper (68) des Stößels (6) ein erstes Stützelement (61) von einem ersten Ende (92) des elastischen Elements (9) aufweist, wobei das erste Stützelement mit einem zweiten Stützelement (63) fest verbunden ist, welches eine Öffnung (66) aufweist, die eingerichtet ist zum Aufnehmen eines Federkeils (65), um den Körper bezüglich der Kugelführungsbüchse (64) festzulegen.

8. Übertragungseinrichtung gemäß irgendeinem der vorhergehenden Ansprüche, **dadurch gekennzeichnet, dass** das Steuerkurvenelement (71) eine Mitnehmerbahn (72) aufweist, die ein Profil hat, das wenigstens teilweise linear und/oder wenigstens teilweise parabolisch und/oder wenigstens teilweise exponentiell ist.

9. Übertragungseinrichtung gemäß irgendeinem der vorhergehenden Ansprüche, **dadurch gekennzeichnet, dass** der Schaft (81) ein Anschlagstützelement (82) aufweist, das im Wesentlichen ringförmig ist und eingerichtet ist zum Zusammenwirken mit einem zweiten Ende (91) des elastischen Elements (9).

10. Steuereinrichtung mit einem Hebel, einem Steuerorgan sowie einer Übertragungseinrichtung (1), die dazu vorgesehen ist, eine auf den Hebel ausgeübte Kraft an das Steuerorgan zu übertragen, **dadurch gekennzeichnet, dass** die Übertragungseinrichtung gemäß einem der vorhergehenden Ansprüche ist.

## Claims

1. A force transmission assembly (1) making it possible, in particular, to transmit forces between a lever and a direction control member, said force transmission assembly comprising:
· a force transmission device (8) including a shaft (81) defining a central axis (X-X); and
· a force-accompanying device (3) including:
- a cam (71), the shaft and the cam being adapted to move in rotation relative to each other;
- a pusher (6) adapted to co-operate with the cam to move in translation along the shaft; and
- a resilient member (9) adapted to work in compression under the effect of the pusher (6) moving in translation, this movement in translation being caused by the transmission assembly being caused to operate;
said force transmission assembly being **characterized in that** the pusher (6) comprises both a body (68) designed to receive cam rollers (62₁, 62₂) adapted to co-operate with the cam (71), and also a ball bushing (64) disposed in the body, the bushing being adapted to co-operate with the shaft (81).

2. A transmission assembly according to claim 1, **characterized in that** the cam (71) is mounted to move about the shaft (81) which is stationary, the pusher (6) moving in translation along the shaft.

3. A transmission assembly according to claim 1, **characterized in that** the shaft (81) is mounted to move about the central axis (X-X) and it drives the pusher (6) in rotation about the axis (X-X), the movement in rotation of the pusher being combined with movement in translation of the pusher along the shaft, and the cam (71) being stationary.

4. A transmission assembly according to any preceding claim, **characterized in that** the shaft (81) is provided with grooves (83) adapted to move the ball bushing (64) in translation relative to the shaft along the axis (X-X).

5. A transmission assembly according to any preceding claim, **characterized in that** the ball bushing (64) is provided with races suitable for receiving the balls, which races are bullet-shaped.

6. A transmission assembly according to claim 4 or claim 5, **characterized in that** the grooves (83) have a bullet-shaped profile and are disposed substantially facing the races.

7. A transmission assembly according to any preceding claim, **characterized in that** the body (68) of the pusher (6) comprises a first support (61) for supporting a first end (92) of the resilient member (9), the first support being secured to a second support (63) provided with an opening (66) adapted to receive a key (65) in order to secure the body relative to the ball bushing (64).

8. A transmission assembly according to any preceding claim, **characterized in that** the cam (71) is provided with a cam path (72) having a profile at least in part linear and/or at least in part parabolic and/or at least in part exponential.

9. A transmission assembly according to any preceding claim, **characterized in that** the shaft (81) is provided with a substantially annular abutment support (82) adapted to co-operate with a second end (91) of the resilient member (9).

10. A control assembly comprising a lever, a direction control member, and a transmission assembly (1) suitable for transmitting a force imparted by the lever to a direction control member, said control assembly being **characterized in that** the transmission assembly is a transmission assembly according to any preceding claim.
